# EUROPEAN PATENT SPECIFICATION

(11) **EP 1 698 187 B1**
(45) Date of publication and mention of the grant of the patent: **17.11.2010**
(21) Application number: 04813527.1
(22) Date of filing: 09.12.2004
(51) Int. Cl.: H04W 48/20

(54) **CELL SELECTION ON TRANSITIONING FROM DEDICATED MODE IN WIRELESS COMMUNICATIONS DEVICES**
ZELLENAUSWAHL BEIM ÜBERGANG VOM FEST ZUGEORDNETEN MODUS IN DRAHTLOSEN KOMMUNIKATIONSGERÄTEN
SELECTION DE CELLULES LORS DE TRANSITION ENTRE UN MODE DEDIE DANS DES DISPOSITIFS DE COMMUNICATIONS SANS FIL

(30) Priority: 19.12.2003 US 741737
(43) Date of publication of application: 06.09.2006
(73) Proprietor: MOTOROLA, INC., Schaumburg, IL 60196 (US)
(72) Inventor: PUTCHA, Padmaja, Gurnee, Illinois 60031 (US); BRANDT, Steve R., Grayslake, IL 60030 (US); DORSEY, Donald A., Vernon Hills, Illinois 60061 (US); POLISETTY, Rohini, Hyderabad-500008 , AndhraPradesh (US); RAGHURAM, Sharada, Buffalo Grove, Illinois 60089 (US)
(74) Representative: Openshaw, Paul Malcolm
(86) International application number: PCT/US2004/041215
(87) International publication number: WO 2005/065135

(56) References cited:
- GB-A- 2 381 414
- US-A- 4 527 284
- US-A- 6 047 164
- US-A1- 2001 041 577
- US-A1- 2003 125 073
- US-A1- 2005 037 769
- US-B1- 6 343 070
- US-B1- 6 745 039
- ANONYMOUS: "Universal Mobile Telecommunications System (UMTS); Radio Resource Control (RRC) protocol specification (3GPP TS 25.331 version 3.17.0 Release 1999); ETSI TS 125 331" 1 December 2003 (2003-12-01), ETSI STANDARDS, LIS, SOPHIA ANTIPOLIS CEDEX, FRANCE , XP002519913 ISSN: 0000-0001 * page 1 * * page 36 - page 69 * * page 857 - page 859 *

## Description

### FIELD OF THE DISCLOSURE

The present disclosure relates generally to wireless communications and, more particularly, to cell selection and channel configuration of wireless communications devices in cellular communications networks, for example, configuring a wireless communication device for a paging channel upon transitioning of the wireless communications device from dedicated mode to common mode operation, and methods therefor.

### BACKGROUND

In some wireless communications systems, wireless mobile stations are required to perform cell selection upon transitioning from a dedicated channel to a common channel. Exemplary common channels include, among others, paging channels, broadcast and common control channels, etc. The network may move the mobile station to a common channel, e.g., from a Dedicated Channel (DCH) to a Forward Access Channel (FACH), for any number of reasons, including, among others, upon completion of a circuit switched call by the mobile station on a dedicated channel, changes in network traffic and/or other network conditions, availability of radio resources, whether or not the mobile station has a packet switched connection, etc.

In some wireless communications systems, for example, in Third Generation Partenrship Project (3GPP) Universal Mobile Telecommunications System (UMTS) W-CDMA communications networks, if the mobile station (referred to as user equipment (UE) in UMTS systems) does not select the correct cell, cell reselection is initiated immediately. Unnecessary cell selection is generally to be avoided.

The cell selection/reselection procedures generally require a finite amount of time. During cell selection upon transitioning to a common channel, for example, the wireless communications device cannot immediately receive pages on the paging channel, which must first be configured for paging. Particularly, during cell selection, the mobile station must read the system information message of the available cells and, following cell selection, configure the paging channel of the cell selected prior to receiving any paging messages. Thus during the selection and configuration procedures, which may require several seconds or more, the mobile station is unable to receive any pages addressed to it since the mobile station has not yet been configured to receive messages on the paging channel. The selection and configuration processes are slowed by the period (repeat cycle) of the network system information broadcast message. In UMTS communications systems this information repeats over a period measured in frames.

The 3^{rd} Generation Partnership Project (3GPP) Radio Resource Control 25.331 specification states the procedure for moving to a common channel from a dedicated channel state including a requirement that the mobile station perform cell selection. However, the 3GPP Radio Resource Control 25.331 specification does not specify the manner or procedures in which the user equipment (UE) should perform cell selection.

US 4 527 284 A discloses an arrangement in which the free transmission capacity of one or more paging channels within a radio cell is employed in order to transmit organization specifications concerning the paging channel frequencies employed in the neighboring radio cells. The appertaining mobile radio station carries out level comparison measurements at suitable chronological intervals on the specific paging channel frequencies for the purpose of its potentially necessary reassignment to a neighboring radio cell. A reassignment of the appertaining mobile radio station to the corresponding neighboring radio cell occurs when a better radio connection quality exists on one of the neighboring radio cell paging channels.

GB 2 381414 A discloses provision of a method that serves to avoid unnecessary re-acquisition of preconfiguration information on a user changing from one public land mobile network to another.

### SUMMARY OF THE INVENTION

The present invention provides a method as claimed in claim 1.

The various aspects, features and advantages of the disclosure will become more fully apparent to those having ordinary skill in the art upon careful consideration of the following Detailed Description thereof with the accompanying drawings described below.

### BRIEF DESCRIPTION OF THE DRAWINGS

FIG.1 illustrates a wireless communications system including a wireless mobile station that communicates with one or more cells of the wireless communications infrastructure.

FIG. 2 is an exemplary common channel configuration process flow diagram.

FIG. 3 is an alternative common channel configuration process flow diagram.

### DETAILED DESCRIPTION

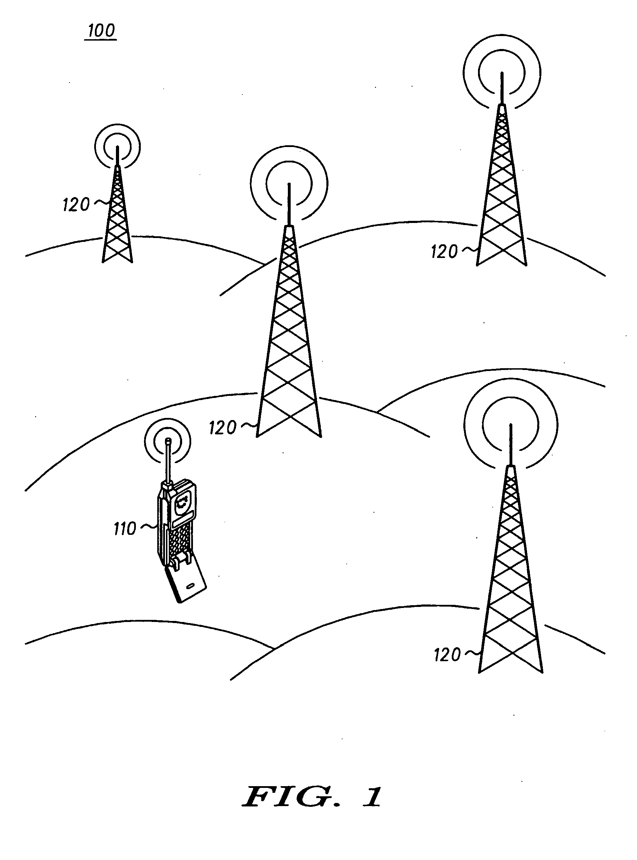

FIG. 1 is an exemplary wireless communications system 100 including a mobile wireless communications device 110, for example, a cellular subscriber device that communicates with other wireless mobile devices and entities via communications network infrastructure. The exemplary communications network infrastructure includes multiple cellular area transceivers 120 communicably coupled to communications infrastructure, well known but not illustrated, for providing uninterrupted wireless communications service in adjacent geographical areas, or cells, as the mobile device travels about. The communications infrastructure may also include gateways and switches for providing access to circuit switched and packet networks.

In some wireless communications systems, for example, in Universal Mobile Telecommunications System (UMTS) protocol compliant systems, mobile wireless communications devices select and reselect cells from time to time with changes in operating mode and location within the network. In the instant disclosure, the terms selection and reselection are used synonymously. In UMTS communications systems, the wireless communications device is referred to as user equipment (UE) and each of the cellular transceivers 120 in FIG. 1 is known as a node B. In other wireless communications systems, the wireless mobile station and transceiver equipment may be known by other names.

In UMTS communication systems, generally, mobile subscriber devices, for example, UE 110 in FIG. 1, receive pilot and synchronization channel information from one or more neighboring base station transceivers, or nodes B, 120. In UMTS systems, each node B has a unique pilot signal distinguished from neighboring pilot signals by a scrambling code. The user equipment 110 must generally identify the neighboring base station pilot signals, which are used by the user equipment to identify the presence of the network, for system acquisition, for demodulation of the synchronization, paging and traffic channels, and for handoffs. The user equipment monitors pilot signals, and the signals that satisfy one or more criteria, for example, signal quality, bit error rate (BER), etc., become part of an active set of signals from which the user equipment 110 performs cell selection, as is known generally by those having ordinary skill in the art.

In some embodiments, it is desirable to select cells appropriately so that unnecessary cell reselection and unnecessary signaling is avoided, since these processes require the utilization of resources, including, for example, battery power, radio resources, etc. It is also desirable, in some embodiments, to quickly configure a common channel, for example, the paging channel, upon transition from dedicated mode to common mode to lessen the likelihood that paging information is missed by the UE. In many applications, over time, expedited common channel configuration will also result in the accrual of not insubstantial power savings at the wireless communication device or UE.

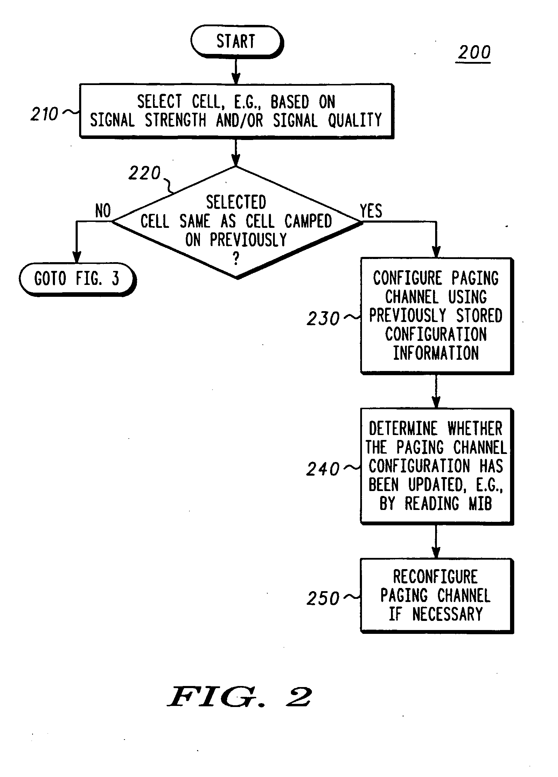

In the exemplary process 200 of FIG. 2, at block 210, a wireless communications device selects a cell. In one exemplary embodiment, cell selection occurs upon transition from a Dedicated Channel (DCH) to a common channel, for example, to a Forward Access Channel (FACH) in the exemplary UMTS wireless communications system. The cell selection at block 210 may be based on any number of one or more criteria including, for example, signal strength and/or signal quality, which may be determined in terms of bit error rate (BER), among others cell selection criteria, some of which is well known in the art.

At block 220, a determination is made as to whether the selected cell is the same as a cell camped on previously by the wireless communications device. In one embodiment, after transitioning from dedicated mode to common mode, for example, a determination is made as to whether the cell selected, at block 210 in FIG. 2, is the same as a cell last camped on by the wireless communications device when it was last in common mode operation, prior to transitioning to dedicated mode and back to common mode.

In FIG. 2, at block 230, if the selected cell is the same as the cell camped on previously, the wireless communications device is configured for the paging channel of the previously camped on cell using system information obtained previously. According to this aspect of the disclosure, the wireless communications device does not wait to obtain system information for the selected cell before configuring the paging channel. Instead, the wireless communications device is configured for the paging channel of the cell camped on previously using paging channel configuration information already stored on the device. Configuring for the paging channel of the cell last camped on eliminates delay required for the wireless communications device to obtain the paging configuration information from a system information message, which is usually broadcast over a periodic time interval. By configuring the paging channel immediately using paging channel configuration information for the cell camped on previously, without first obtaining system information for the selected cell, the wireless communication device can begin monitoring the paging channel relatively quickly, thereby reducing the likelihood that it will miss a page on the paging channel while configuring or updating the paging channel of the newly selected cell.

In FIG. 2, at block 240, the wireless communications device determines whether there is any updated system information for the paging channel. In UMTS wireless communications systems, any updates to the system information are indicated by the master information block (MIB) information, which is broadcast periodically. Thus the wireless communications device may determine whether the configuration of the paging channel has been updated by reading the MIB or similar information in other wireless communications systems. In some embodiments, the wireless device simultaneously reads the MIB while configuring for the paging channel of the cell camped on previously. In the exemplary W-CDMA application, the wireless communication device determines whether value tags read in the MIB have changed, and if so the wireless communications device obtains the updated paging channel configuration by reading the system information block (SIB). In FIG. 2, at block 250, the wireless communications device updates the paging channel configuration if necessary.

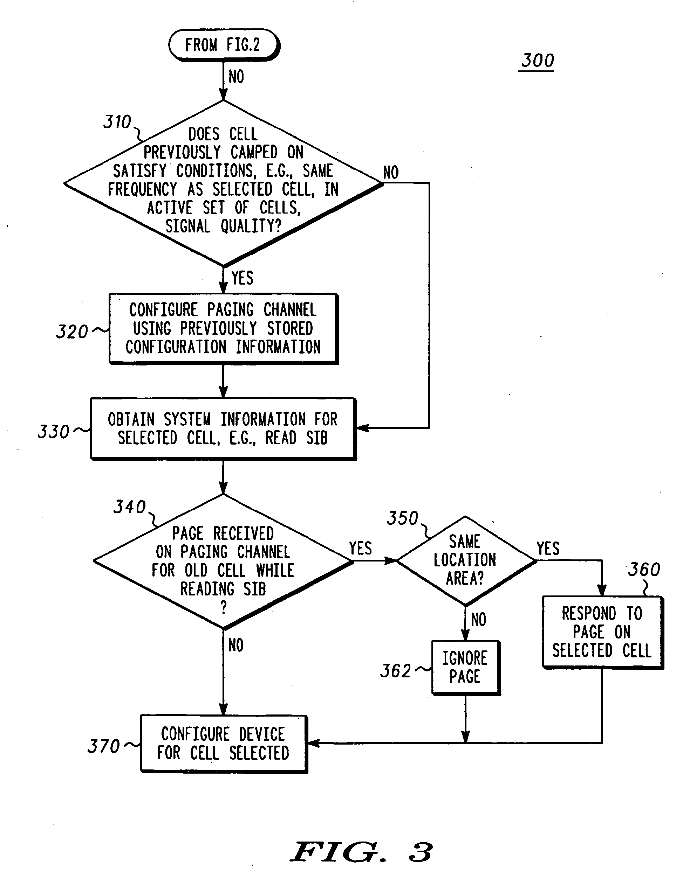

If the cell selected at block 210 in FIG. 2 is not the same as the cell camped on previously, as determined at block 220 in FIG. 2, then the process proceeds to process 300 illustrated in FIG. 3. In FIG. 3, at block 310, a determination is made as to whether the cell camped on previously satisfies certain conditions. Exemplary conditions include, for example, whether the cell previously camped on is on the same frequency as the cell selected, whether the cell previously camped on is in the active set of cells, and whether the cell previously camped on satisfies a signal level threshold requirement.

In FIG. 3, at block 320, if the one or more conditions are satisfied at block 310, the wireless communications device is configured for the paging channel of the previously camped on cell using system information previously obtained for the cell previously camped on, as discussed above in connection with block 230 in FIG. 2. The wireless communications device preferably configures the paging channel using paging channel configuration information previously stored on the device, for example, that required for the paging channel of last camped on cell. Using the previously stored paging configuration information for the previously camped on cell eliminates the delay required for the wireless communications device to obtain system configuration information for the newly selected cell, for example, the cell selected at block 210 in FIG. 2.

In FIG. 3, at block 330, the wireless communications device obtains paging configuration information for the cell selected, for example, the cell selected at block 210 in FIG. 2. In the exemplary W-CDMA application, the paging configuration information is obtained by reading the system information block (SIB) of the selected cell. In some embodiments, if the one or more conditions are satisfied at block 310, the wireless communications device obtains the paging configuration information for the newly selected cell at the same time it is configured for the paging channel of the cell camped on previously.

In FIG. 3, at block 350, if a page is received by the wireless communications device while it is configured for the paging channel of the cell camped on previously, for example, while obtaining paging configuration information for the newly selected cell, the wireless communications device determines whether the location area (LA) of the selected cell is the same as the location area of the cell camped on previously for which the paging channel is presently configured. At block 360, if the location areas are the same, the wireless communications device may respond to the page on the selected cell. At block 362, if the location areas are not the same, the wireless communications device may ignore the page.

In FIG. 3, at block 370, the wireless communications device is configured for the paging channel of the cell selected using system information, for example, system information block (SIB) information, obtained for the cell selected while the paging channel was configured for the cell camped on previously.

While the present disclosure and the best modes thereof have been described in a manner establishing possession by the inventors and enabling those of ordinary skill in the art to make and use the same, it will be understood and appreciated that there are many equivalents to the exemplary embodiments disclosed herein and that modifications and variations may be made thereto without departing from the scope of the invention, which is to be limited not by the exemplary embodiments but by the appended claims.

## Claims

1. A method in a wireless communications device that performs cell selection, the method comprising selecting a cell and monitoring a channel containing system information messages of the selected cell, **characterized in that**
after selection, the wireless communications device
monitors a paging channel of a cell previously camped on by the wireless communications device, for the purpose of receiving a page, while monitoring the channel containing system information messages of the selected cell,
wherein the wireless communications device monitors the paging channel of the cell previously camped on using system information previously obtained for the cell previously camped on.

2. The method of Claim 1,
the selected cell and the cell previously camped on are the same,
obtaining updated system information for the selected cell after configuring the wireless communications device to monitor the paging channel of the cell previously camped on,
configuring the wireless communications device for the paging channel based on the updated system information.

3. The method of Claim 1,
the selected cell and the cell previously camped on are different,
obtaining system information for the selected cell after configuring the wireless communications device to monitor the paging channel of the cell previously camped on,
reconfiguring the wireless communications device to monitor the paging channel of the selected cell for the purpose of receiving a page based upon system information for the selected cell.

4. The method of Claim 2 further comprising receiving a master information block for the selected cell, determining whether there is any updated system information based on the master information block for the selected cell.

5. The method of Claim 2 further comprising obtaining the updated system information from a system information block for the selected cell after selection.

6. The method of Claim 1 further comprising
receiving a page while the wireless communications device is configured to monitor the paging channel of the cell previously camped on,
determining whether the selected cell and the cell previously camped on are in a common location area,
responding to the received page on the selected cell only if the selected cell and the previously camped on cell are in a common location area.

7. The method of Claim 1 further comprising
receiving a page while the wireless communications device is configured to monitor the paging channel of the cell previously camped on,
responding to the received page on the selected cell if the selected cell and the previously camped on cell are in a common location area.

8. The method of Claim 1 further comprising conditionally configuring the wireless communications device to monitor the paging channel of the cell previously camped on based on whether a signal strength of the cell previously camped on satisfies a threshold condition.

9. The method of Claim 1 further comprising conditionally configuring the wireless communications device to monitor the paging channel of the cell previously camped on based on whether the selected cell and the cell previously camped on are on a common frequency.

10. The method of Claim 1 further comprising conditionally configuring the wireless communications device to monitor the paging channel of the cell previously camped on based on whether the cell previously camped on is in a set of active cells of the wireless communications device.

11. The method of Claim 1 further comprising conditionally configuring the wireless communications device to monitor the paging channel of the cell previously camped on based on whether the cell previously camped on is in a set of cells monitored by the wireless communications device.

12. The method of Claim 1 further comprising monitoring a channel containing system information messages of the selected cell for paging channel configuration information.

## Patentansprüche

1. Ein Verfahren in einem drahtlosen Kommunikationsgerät, das eine Zellenauswahl durchführt, wobei das Verfahren das Auswählen einer Zelle und das Überwachen eines Kanals, der Systeminformationsnachrichten der ausgewählten Zelle beinhaltet, umfasst, **dadurch gekennzeichnet, dass**
nach dem Auswählen das drahtlose Kommunikationsgerät einen Rufkanal einer Zelle, die zuvor von dem drahtlosen Kommunikationsgerät verwendet wurde, zwecks Empfangen eines Rufs überwacht, während der Kanal, der Systeminformationsnachrichten der ausgewählten Zelle beinhaltet, überwacht wird,
wobei das drahtlose Kommunikationsgerät den Rufkanal der zuvor verwendeten Zelle unter Verwendung von Systeminformation, die zuvor für die zuvor verwendete Zelle bezogen wurde, überwacht.

2. Das Verfahren nach Anspruch 1,
wobei die ausgewählte Zelle und die zuvor verwendete Zelle gleich sind,
Beziehen von aktualisierter Systeminformation für die ausgewählte Zelle nach Konfigurieren des drahtlosen Kommunikationsgeräts zur Überwachung des Rufkanals der zuvor verwendeten Zelle,
Konfigurieren des drahtlosen Kommunikationsgeräts für den Rufkanal auf der Basis der aktualisierten Systeminformation.

3. Das Verfahren nach Anspruch 1,
wobei die ausgewählte Zelle und die zuvor verwendete Zelle verschieden sind,
Beziehen von Systeminformation für die ausgewählte Zelle nach Konfigurieren des drahtlosen Kommunikationsgeräts zur Überwachung des Rufkanals der zuvor verwendeten Zelle,
Neukonfigurieren des drahtlosen Kommunikationsgeräts zur Überwachung des Rufkanals der ausgewählten Zelle zwecks Empfangen eines Rufs auf der Basis von Systeminformation für die ausgewählte Zelle.

4. Das Verfahren nach Anspruch 2, das ferner folgendes umfasst:
Empfangen eines Master-Informationsblocks für die ausgewählte Zelle, Bestimmen, ob aktualisierte Systeminformation vorhanden ist, auf der Basis des Master-Informationsblocks für die ausgewählte Zelle.

5. Das Verfahren nach Anspruch 2, das ferner das Beziehen der aktualisierten 5ysteminformation aus einem Systeminformationsblock für die ausgewählte Zelle nach der Auswahl umfasst.

6. Das Verfahren nach Anspruch 1, das ferner folgendes umfasst:
Empfangen eines Rufs, während das drahtlose Kommunikationsgerät zum Überwachen des Rufkanals der zuvor verwendeten Zelle konfiguriert wird,
Bestimmen, ob die ausgewählte Zelle und die zuvor verwendete Zelle sich in einem gemeinsamen Standortbereich befinden,
Antworten auf den empfangenen Ruf an der ausgewählten Zelle nur, falls die ausgewählte Zelle und die zuvor verwendete Zelle sich in einem gemeinsamen Standortbereich befinden.

7. Das Verfahren nach Anspruch 1, das ferner folgendes umfasst:
Empfangen eines Rufs, während das drahtlose Kommunikationsgerät zum Überwachen des Rufkanals der zuvor verwendeten Zelle konfiguriert wird,
Antworten auf den empfangenen Ruf an der ausgewählten Zelle, falls die ausgewählte Zelle und die zuvor verwendete Zelle sich in einem gemeinsamen Standortbereich befinden.

8. Das Verfahren nach Anspruch 1, das ferner das bedingte Konfigurieren des drahtlosen Kommunikationsgeräts zum Überwachen des Rufkanals der zuvor verwendeten Zelle auf der Basis davon umfasst, ob eine Signalstärke der zuvor verwendeten Zelle eine Grenzwertbedingung erfüllt.

9. Das Verfahren nach Anspruch 1, das ferner das bedingte Konfigurieren des drahtlosen Kommunikationsgeräts zum Überwachen des Rufkanals der zuvor verwendeten Zelle auf der Basis davon umfasst, ob die ausgewählte Zelle und die zuvor verwendete Zelle sich auf einer gemeinsamen Frequenz befinden.

10. Das Verfahren nach Anspruch 1, das ferner das bedingte Konfigurieren des drahtlosen Kommunikationsgeräts zum Überwachen des Rufkanals der zuvor verwendeten Zelle auf der Basis davon umfasst, ob die zuvor verwendete Zelle sich in einem Satz von aktiven Zellen des drahtlosen Kommunikationsgeräts befindet.

11. Das Verfahren nach Anspruch 1, das ferner das bedingte Konfigurieren des drahtlosen Kommunikationsgeräts zum Überwachen des Rufkanals der zuvor verwendeten Zelle auf der Basis davon umfasst, ob die zuvor verwendete Zelle sich in einem Satz von Zellen befindet, der von dem drahtlosen Kommunikationsgerät überwacht wird.

12. Das Verfahren nach Anspruch 1, das ferner das Überwachen eines Kanals, der Systeminformationsnachrichten der ausgewählten Zelle beinhaltet, auf Rufkanal-Konfigurationsinformation umfasst.

## Revendications

1. Procédé dans un dispositif de communication sans fil qui réalise une sélection de cellule, le procécé comprenant la sélection d'une cellule et la surveillance d'un canal contenant des messages d'informations de système de la cellule sélectionnée, **caractérisé par le fait que**,
après sélection, le dispositif de communication sans fil surveille un canal de recherche d'une cellule préalablement mise en attente par le dispositif de communication sans fil, dans le but de recevoir une page, tout en surveillant le canal contenant des messages d'informations de système de la cellule sélectionnée,
le dispositif de communications sans fil surveillant le canal de recherche de la cellule préalablement mise en attente à l'aide d'informations de système préalablement obtenues pour la cellule préalablement mise en attente.

2. Procédé selon la revendication 1,
la cellule sélectionnée et la cellule préalablement mise en attente sont identiques,
l'obtention d'informations de système mises à jour pour la cellule sélectionnée après configuration du dispositif de communication sans fil pour surveiller le canal de recherche de la cellule préalablement mise en attente,
la configuration du dispositif de communication sans fil pour le canal de recherche sur la base des informations de système mises à jour.

3. Procédé selon la revendication 1,
la cellule sélectionnée et la cellule préalablement mise en attente sont différentes,
l'obtention d'informations de système pour la cellule sélectionnée après configuration du dispositif de communication sans fil pour surveiller le canal de recherche de la cellule préalablement mise en attente,
la reconfiguration du dispositif de communication sans fil pour surveiller le canal de recherche de la cellule sélectionnée dans le but de recevoir une page sur la base d'informations de système pour la cellule sélectionnée.

4. Procédé selon la revendication 2, comprenant en outre
la réception d'un bloc d'informations maître pour la cellule sélectionnée,
la détermination du fait que des informations de système mises à jour sont présentes sur la base du bloc d'informations maître pour la cellule sélectionnée.

5. Procédé selon la revendication 2, comprenant en outre l'obtention des informations de système mises à jour à partir d'un bloc d'informations de système pour la cellule sélectionnée après sélection.

6. Procédé selon la revendication 1, comprenant en outre
la réception d'une page tandis que le dispositif de communication sans fil est configuré pour surveiller le canal de recherche de la cellule préalablement mise en attente,
la détermination du fait que la cellule sélectionnée et la cellule préalablement mise en attente se trouvent dans une zone de localisation commune,
la réponse à la page reçue sur la cellule sélectionnée seulement si la cellule sélectionnée et la cellule préalablement mise en attente se trouvent dans une zone de localisation commune.

7. Procédé selon la revendication 1, comprenant en outre
la réception d'une page tandis que le dispositif de communication sans fil est configuré pour surveiller le canal de recherche de la cellule préalablement mise en attente,
la réponse à la page reçue sur la cellule sélectionnée si la cellule sélectionnée et la cellule préalablement mise en attente se trouvent dans une zone de localisation commune.

8. Procédé selon la revendication 1, comprenant en outre la configuration conditionnelle du dispositif de communication sans fil pour surveiller le canal de recherche de la cellule préalablement mise en attente sur la base du fait qu'une intensité de signal de la cellule préalablement mise en attente satisfait ou non une condition de seuil.

9. Procédé selon la revendication 1, comprenant en outre la configuration conditionnelle du dispositif de communication sans fil pour surveiller le canal de recherche de la cellule préalablement mise en attente sur la base du fait que la cellule sélectionnée et la cellule préalablement mise en attente sont ou non sur une fréquence commune .

10. Procédé selon la revendication 1, comprenant en outre la configuration conditionnelle du dispositif de communication sans fil pour surveiller le canal de recherche de la cellule préalablement mise en attente sur la base du fait que la cellule préalablement mise en attente est ou non dans un ensemble de cellules actives du dispositif de communication sans fil.

11. Procédé selon la revendication 1, comprenant en outre la configuration conditionnelle du dispositif de communication sans fil pour surveiller le canal de recherche de la cellule préalablement mise en attente sur la base du fait que la cellule préalablement mise en attente est ou non dans un ensemble de cellules surveillées par le dispositif de communication sans fil.

12. Procédé selon la revendication 1, comprenant en outre la surveillance d'un canal contenant des messages d'informations de système de la cellule sélectionnée pour des informations de configuration de canal de recherche.
